# EUROPEAN PATENT APPLICATION

(11) **EP 2 980 783 A1**
(43) Date of publication of application: **03.02.2016**
(21) Application number: 14185478.6
(22) Date of filing: 19.09.2014
(51) Int. Cl.: G09G 5/00, G06F 3/147, G06F 21/34

(54) **Portable liquid crystal module for displaying rack mount information**

(30) Priority: 30.07.2014 TW 103213490
(71) Applicant: QSAN Technology, Inc., Neihu Dist. Taipei (TW)
(72) Inventor: Lin, Shih-Wei, 231 New Taipei City (TW)
(74) Representative: Becker Kurig Straus

(57) **Abstract**

A portable liquid crystal module (300) configured to display rack mount information includes a display unit (320), a universal serial bus (USB) interface, a USB port (310), and a processing unit. When the USB port is connected to a rack mount, the processing unit is configured to access system information of the rack mount through the USB port and control the display unit (320) to display the system information.

## Description

### Field of the Invention

The invention relates to a light crystal module, and more particularly, the invention relates to a portable light crystal module configured to display rack mount information.

### Description of Related Art

On the casing of a conventional rack mount, a fixed-type liquid crystal module is often operated by an administrator for accessing system information in the rack mount. However, such a liquid crystal module does not require a user authentication process, and people in addition to the administrator can easily operate the liquid crystal module and obtain the system information, which compromises the confidentiality of data. Moreover, the pivot configured to fix the liquid crystal module may be damaged during shipment or due to human errors. Besides, an additional region on the rack mount is required for accommodating the liquid crystal module, such that the area occupied by the disk array on the rack mount is reduced, and the storage space is reduced as well.

### SUMMARY OF THE INVENTION

The invention is directed to a portable liquid crystal module configured to display rack mount information. Through a universal serial bus (USB) port that is connected to a rack mount, a user of the portable liquid crystal module is able to access system information of the rack mount.

In an embodiment of the invention, a portable liquid crystal module (LCM) that includes a display unit, a USB interface, a USB port, and a processing unit is provided. The USB port is coupled to the USB interface. The processing unit is coupled to the display unit, the storage unit, and the USB interface. When the USB port is connected to a rack mount, the processing unit is configured to access system information of the rack mount through the USB port and control the display unit to display the system information.

According to an embodiment of the invention, the system information includes an internet protocol (IP) address of the rack mount.

According to an embodiment of the invention, the portable liquid crystal module is further characterized by an input interface that is coupled to the processing unit. When the USB port is connected to the rack mount, the processing unit is configured to: control the display unit to display an authentication process; determine whether an input command received through the input interface complies with the authentication process; if yes, the processing unit is configured to control the display unit to display the system information, and if not, the processing unit is configured not to control the display unit to display the system information

According to an embodiment of the invention, the portable liquid crystal module is further characterized by a storage unit that is coupled to the processing unit, and the storage unit stores updated firmware associated with the rack mount. When the USB port is connected to the rack mount, the processing unit is configured to update corresponding current firmware on the rack mount according to the updated firmware.

According to an embodiment of the invention, the updated firmware includes at least one of redundant array of independent disk (RAID) controller firmware, basic input/output system (BIOS) firmware, complex programmable logic device (CPLD) firmware, serial attached small computer system interface input/output controller (SAS IOC) firmware, and serial attached small computer system interface (SAS) expander firmware.

In view of the above, the portable liquid crystal module configured to display the rack mount information is provided herein; through the USB port that is connected to the rack mount, a user of the portable liquid crystal module is able to access the system information of the rack mount. Thereby, no additional region on the rack mount is required for accommodating the liquid crystal module; as a result, the rack mount can be arranged in a more flexible manner, and the mechanism (e.g., the pivot) is less likely to be damaged. Last but not least, the system information of the rack mount can merely be accessed by those who own the portable liquid crystal module, such that the confidentiality of data can be further enhanced.

Several exemplary embodiments accompanied with figures are described in detail below to further describe the invention in details.

### BRIEF DESCRIPTION OF THE DRAWINGS

FIG. 1 is a functional block diagram illustrating a portable liquid crystal module according to an embodiment of the invention.
FIG. 2 is a functional block diagram illustrating a portable liquid crystal module according to an embodiment of the invention.
FIG. 3 includes a top view and a three-dimensional view of a portable liquid crystal module according to an embodiment of the invention.

### DETAILED DESCRIPTION OF DISCLOSED EMBODIMENTS

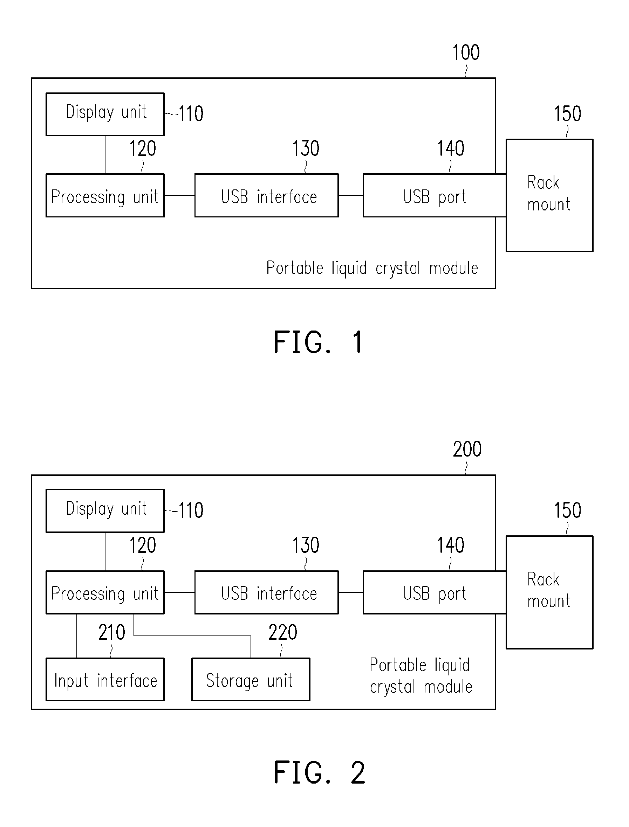

FIG. 1 is a functional block diagram illustrating a portable liquid crystal module according to an embodiment of the invention. According to the present embodiment, the portable liquid crystal module 100 includes a display unit 110, a processing unit 120, a USB interface 130, and a USB port 140. The display unit 110 is, for instance, a liquid crystal display (LCD), a plasma display, a vacuum fluorescent display, a light-emitting diode (LED) display, a field emission display (FED), and/or any other appropriate display, or any other electronic apparatus including one or some of said displays.

The processing unit 120 is coupled to the display unit 110 and the USB interface 130. Here, the processing unit 120 may be a microcontroller, a general processor, a specific processor, a conventional processor, a processor capable of processing digital signals, a plurality of microprocessors, one or more microprocessors combining cores of the processor capable of processing digital signals, a controller, an application specific integrated circuit (ASIC), a field programmable gate array (FPGA), any other integrated circuit, a state machine, an advanced RISC machine (ARM) processor, and the like.

The USB interface 130 is coupled to the USB port 140 and may be operated according to USB 2.0, USB 3.0, and other relevant USB specifications and protocols.

According to the present embodiment, when the USB port 140 is connected to the rack mount 150, the processing unit 120 is configured to access system information of the rack mount 150 through the USB port 140 and control the display unit 110 to display the system information. The system information is an IP address of the rack mount 150, for instance, while the invention is not limited thereto.

Thereby, no additional region on the rack mount 150 is required for accommodating the liquid crystal module; as a result, the rack mount 150 can be arranged in a more flexible manner, and the mechanism (e.g., the pivot) is less likely to be damaged. Besides, the system information of the rack mount 150 can merely be accessed by those who own the portable liquid crystal module, such that the confidentiality of data can be further enhanced. Moreover, the administrator is able to access multiple rack mounts by means of one single portable liquid crystal module, and thus the overall management and control of the rack mounts can be facilitated.

In another embodiment, to further improve the confidentiality of data, an authentication process may be further performed on the portable liquid crystal module provided herein; once a user passes the authentication process, the system data of the rack mount can be displayed on the display unit.

FIG. 2 is a functional block diagram illustrating a portable liquid crystal module according to an embodiment of the invention. According to the present embodiment, the portable liquid crystal module 200 not only includes the components shown in FIG. 1 but also comprises a storage unit 220 and an input interface 210 that is coupled to the processing unit 120. The input interface 210 is, for instance, a keyboard that includes physical buttons, a touch panel, a touch screen, and so on, which should however not be construed as a limitation to the invention. The storage unit 220 is a memory, a flash memory, a hard drive, or any other device which may be used to store data, for instance.

In the present embodiment, when the USB port 140 is connected to the rack mount 150, the processing unit 120 can be configured to control the display unit 110 to display the authentication information. The processing unit 120 can then determine whether an input command received through the input interface 210 complies with the authentication process. If the input command complies with the authentication process, the processing unit 120 can control the display unit 110 to display the system information; otherwise, the processing unit 120 may not control the display unit 110 to display the system information.

For instance, the authentication process may be a process of displaying a message to require a user for inputting strings of certain keystrokes, for instance. Alternatively, the authentication process may be a process of recognizing whether a user has the authorization, e.g., through fingerprint recognition; however, the invention is not limited thereto. Hence, if the input command of the user does not allow the user to pass the authentication process, the display unit 110 does not display any information of the rack mount 150. As such, the confidentiality of data of the rack mount can be further enhanced.

According to another embodiment of the invention, if the USB port 140 is connected to the rack mount 150, the processing unit 120 can be configured to update corresponding current firmware on the rack mount 150 according to the updated firmware. The updated firmware includes at least one of RAID controller firmware, BIOS firmware, CPLD firmware, SAS IOC firmware, and SAS expander firmware, which should however not be construed as a limitation to the invention.

That is, if the administrator intends to update the current firmware on the rack amount 150, the administrator is merely required to store the updated firmware into the storage unit 220 and connect the USB port 140 to the rack mount 150. After that, the portable liquid crystal module 200 can spontaneously update the corresponding current firmware on the rack mount 150 according to the updated firmware, and thus the administrator can manage and control the rack mount 150 in a more convenient manner.

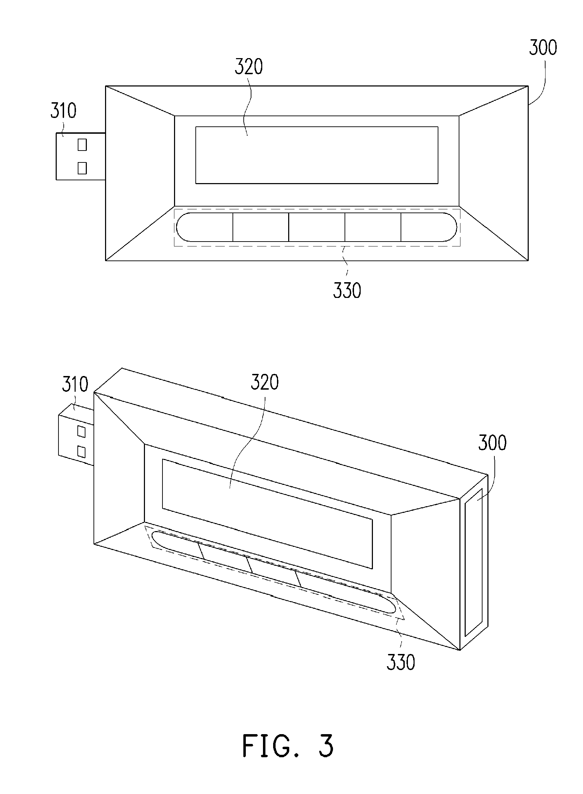

FIG. 3 includes a top view and a three-dimensional view of a portable liquid crystal module according to an embodiment of the invention. According to the present embodiment, the portable liquid crystal module 300 includes a USB port 310, a display unit 320, and an input interface that includes a plurality of physical buttons. As discussed above, if the administrator intends to access the rack mount information, the administrator may connect the USB port 310 to the rack mount; once the authentication process is completed through the input interface 330, the rack mount information can be accessed successfully.

To sum up, the portable liquid crystal module configured to display the rack mount information is provided herein; through the USB port that is connected to the rack mount, the user of the portable liquid crystal module is able to access the system information of the rack mount. Besides, the authentication process may be further performed on the portable liquid crystal module provided herein; once the user passes the authentication process, the system data of the rack mount can be displayed on the display unit. As such, the overall management and control of the rack mount can be facilitated, and the confidentiality of data of the rack mount can be further enhanced.

## Claims

1. A portable liquid crystal module (100, 200, 300) configured to display rack mount information, the portable liquid crystal module (100, 200, 300) **characterized by**:
a display unit (110, 320) ;
a universal serial bus interface (130);
a universal serial bus port (140, 310) coupled to the universal serial bus interface (130); and
a processing unit (120) coupled to the display unit (110, 320) and the universal serial bus interface (130),
wherein when the universal serial bus port (140, 310) is connected to a rack mount (150), the processing unit (120) is configured to access system information of the rack mount (150) through the universal serial bus port (140, 310) and control the display unit (110, 320) to display the system information.

2. The portable liquid crystal module (100, 200, 300) as recited in claim 1, **characterized in that** the system information comprises an internet protocol address of the rack mount (150).

3. The portable liquid crystal module (200, 300) as recited in claim 1, **characterized by** an input interface (210, 330) coupled to the processing unit (120), when the universal serial bus port (140, 310) is connected to the rack mount (150), the processing unit (120) being configured:
to control the display unit (110, 320) to display an authentication process;
to determine whether an input command received through the input interface (210, 330) complies with the authentication process;
if yes, the processing unit (120) being configured to control the display unit (110, 320) to display the system information, and
if not, the processing unit (120) being configured not to control the display unit (110, 320) to display the system information.

4. The portable liquid crystal module (200, 300) as recited in claim 3, **characterized by** a storage unit (220) coupled to the processing unit (120), the storage unit (220) storing updated firmware associated with the rack mount (150), when the universal serial bus port (140, 310) is connected to the rack mount (150), the processing unit (120) being configured to update corresponding current firmware on the rack mount (150) according to the updated firmware.

5. The portable liquid crystal module (200, 300) as recited in claim 4, **characterized in that** the updated firmware comprises at least one of redundant array of independent disk controller firmware, basic input/output system firmware, complex programmable logic device firmware, serial attached small computer system interface input/output controller firmware, and serial attached small computer system interface expander firmware.
